# EUROPÄISCHE PATENTSCHRIFT

(11) **EP 0 352 423 B1**
(45) Veröffentlichungstag und Bekanntmachung des Hinweises auf die Patenterteilung: **15.09.1993**
(21) Anmeldenummer: 89108996.3
(22) Anmeldetag: 19.05.1989
(51) Int. Cl.: G01N 23/20

(54) **Verfahren und Vorrichtung zur Texturanalyse**
Method and device for texture analysis
Méthode et dispositif pour l'analyse de texture

(30) Priorität: 29.07.1988 DE 3825830
(43) Veröffentlichungstag der Anmeldung: 31.01.1990
(73) Patentinhaber: Krupp Hoesch Stahl AG, 44120 Dortmund (DE)
(72) Erfinder: Kopineck, Hermann-Josef, Prof. Dr. rer. nat., D-4600 Dortmund 50 (DE); Otten, Heiner, Dipl.-Phys., D-4600 Dortmund 1 (DE); Bunge, Hans-Joachim, Prof. Dr. Dr. hc., D-3392 Clausthal (DE)

(56) Entgegenhaltungen:
- DE-B- 2 817 742
- TEXTURES AND MICROSTRUCTURES, Band 7, 1987, Seiten 97-113, GB; H.-J. KOPINECK et al.: "Texture analyzer for on-line Rm value estimation"

## Beschreibung

Die Erfindung betrifft ein Verfahren und eine Vorrichtung zur Texturanalyse von gewalzten Blechen und Bändern mit Hilfe von diese durchstrahlenden Röntgenstrahlen oder Gammastrahlen, wobei deren am kristallinen Gitteraufbau hervorgerufene Beugung analysiert wird und daraus die Texturwerte berechnet werden und wobei diese Werte bei der Berechnung der Texturkoeffizienten auf eine texturlose Probe bezogen werden.

Aus der DE-PS 28 17 742 ist ein Verfahren sowie eine Vorrichtung gemäß dem Oberbegriff des Anspruchs 1 bzw. Anspruchs 5 zum Bestimmen des mittleren Anisotropiewertes rₘ bekannt.
Es ist bei diesem verfahren von Nachteil, daß beim Wechsel der Qualitäten, mit denen sich der Texturtyp ändert, die Meßeinrichtung durch Vergleiche mit Proben des jeweiligen Texturtyps neu kallibriert werden muß. Außerdem können mit der Meßeinrichtung außer dem rₘ Wert keine weiteren von der Textur abhängigen Werte hinreichend genau bestimmt werden.

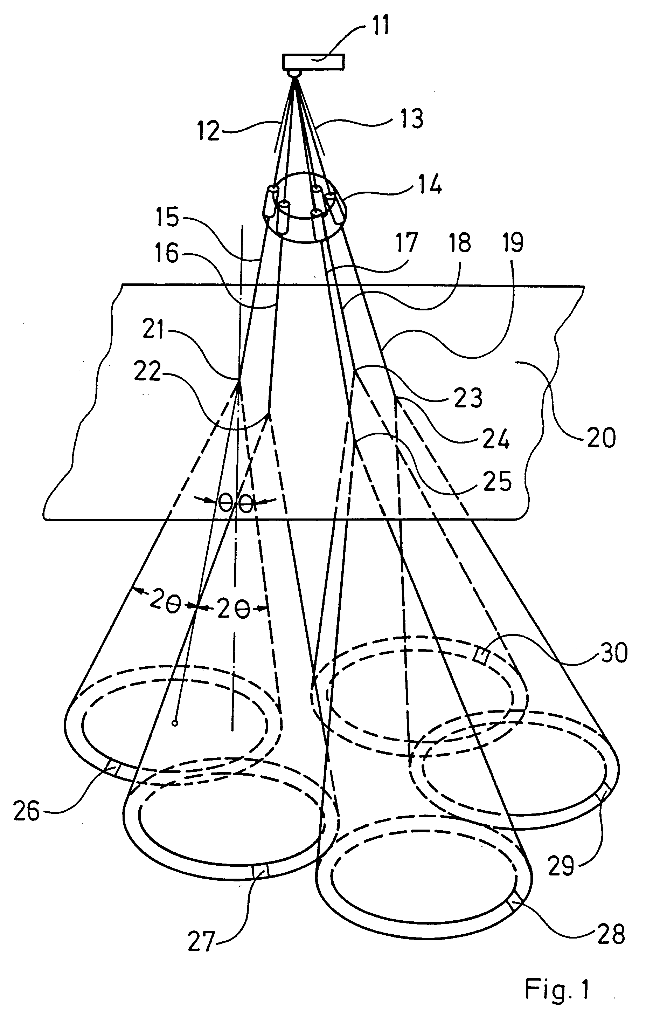

In dem Buch "Theoretical Methods of Texture Analysis" Ausgabe 1987 des Verlages DGM Informationsgesellschaft wurde unter dem Titel "Computational Problems in Low Resolution Texture Analysis" von Bunge und Wang auf den Seiten 163 bis 173 ein Verfahren beschrieben, wie man mit relativ wenigen Meßwerten die Texturkoeffizienten bestimmen kann, die zur Berechnung von Werkstoffkennwerten notwendig sind. Auf Seite 165 und insbesondere in der Fig. 1 (Bunge, Wang) ist die Gewinnung der Meßwerte beschrieben.
Nach der Lehre der Fig. 1 von Bunge trifft ein einzelner Röntgenstrahl auf eine kleine annähernd punktförmige Fläche am zu untersuchenden Blech auf.
Die den Röntgenstrahl beugenden Kristallgitterebenen haben verschiedene Winkel zum auftreffenden Strahl. Deshalb wird der polychromatische Röntgenstrahl an jeder Ebene in einem anderen Winkel gebeugt. Die einzelnen gebeugten Strahlen treffen auf die mit 1 bis 3 bezeichneten Detektoren der Fig. 1 von Bunge. Aus den Beugungswinkeln der in die Detektoren einfallenden Strahlung und aus der Energieverteilung der Röntgenquanten bzw. Wellenlängen werden mit relativ wenig Detektoren unter günstigen Voraussetzungen genügend Informationen erhalten, um die Texturkoeffizienten, die für die Ermittlung von Werkstoffkennwerten notwendig sind, in einem Rechner nach den von Bunge und Wang angegebenen Rechenmethoden berechnen zu können.
Die von Bunge und Wang angenommenen günstigen Voraussetzungen, daß drei und mehr Detektoren in den Beugungskegeln eines Primärstrahls untergebracht werden können, lassen sich in der Praxis ledigliche bei der Messung von sehr dünnen Blechen durchführen. Es sind nur bei unter 1 mm dicken Blechen die Beugungskegel so groß, daß innerhalb dieser an meßtechnisch günstigen Stellen Platz für 3 Detektoren vorhanden ist.

Große Beugungskegel mit Beugungswinkeln von 8° und mehr, in denen auch mehrere Detektoren Platz finden, können bekanntlich nur bei energiearmen Röntgenstrahlen, die dicke Bleche nicht ausreichend durchbringen, benutzt werden. Bei dickeren Blechen, insbesondere bei über 1 mm Blechdicke, müssen äußerst energiereiche Röntgenstrahlen mit Röhren erzeugt werden, die mehr als 60 kV Betriebsspannung haben. Bei diesen energiereichen Röntgenstrahlen muß mit Beugungswinkeln von weniger als 8° gearbeitet werden, so daß nur äußerst kleine Beugungskegel entstehen.
Es ist auch nicht möglich, den Abstand zwischen dem zu untersuchenden Blech und den Detektoren zu vergrößern, um so mehr Platz im Beugungskegel zu erhalten. Die Abstände müssen in jedem Fall so klein wie möglich gehalten werden, weil die Intensität mit dem Quadrat der Entfernung abnimmt und viele Beugungsreflexe bei größerer Entfernung in der Intensität unterhalb der je Grenze des Meßbaren liegen würden.

Aus diesem Grunde und weil letztlich auch für die Untersuchung dünnerer Bleche mehr als ein Einstrahlwinkel erforderlich ist, ist das von Bunge und Wang in ihrer Fig. 1 angedeutete Meßverfahren nur in seltenen Fällen anwendbar, wogegen das Rechenverfahren zur Auswertung der Meßergebnisse allgemein Gültigkeit hat.

Der vorliegenden Erfindung liegt die Aufgabe zugrunde, ein Verfahren und eine Meßanordnung mit durchstrahlender Röntgen- oder Gammastrahlung zu schaffen, bei denen auch bei dicken Blechen die Texturkoeffizienten äußerst genau bestimmt werden können und bei welchen beim Wechsel der Qualitäten keine Probensätze mit bekannten Texturwerten zur erneuten Kalibrierung erforderlich sind und bei dem die Messungen auch bei sich bewegenden Blechen oder Bändern durchgeführt werden können.

Diese Aufgabe wird durch das in Anspruch 1 beschriebene Verfahren und die in Anspruch 5 beschriebene Vorrichtung gelöst. Weiterbildungen des Verfahrens und der Vorrichtung sind in den Unteransprüchen 2 bis 4 bzw. 5 bis 13 beschrieben.

Die Fig. 1 stellt die Meßvorrichtung dar und

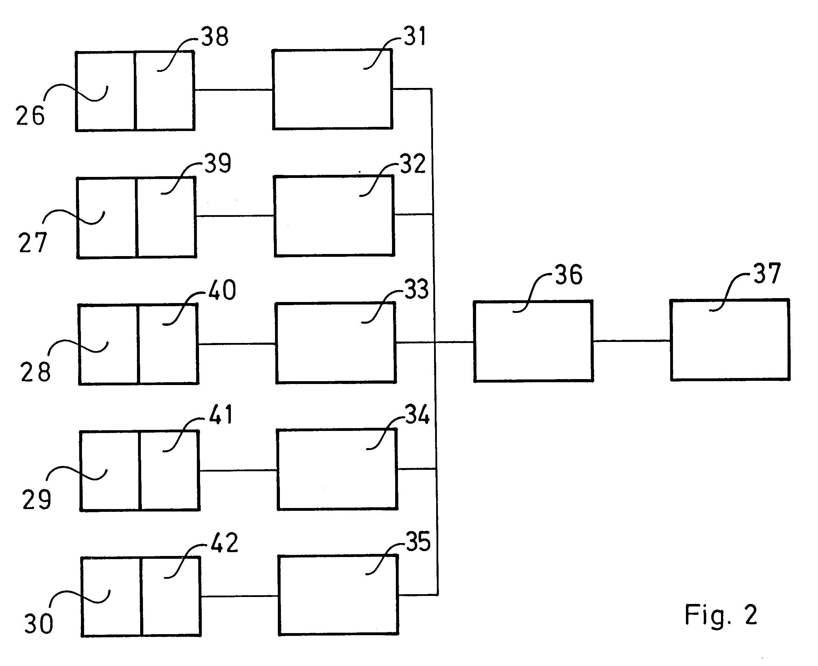

Fig. 2 ein Blockschaltbild bezüglich der Meßwertverarbeitung.

Die Erfindung wird an einem Beispiel näher erläutert. Die aus der Röntgenröhre 11 austretende Röntgenstrahlung wird von den Strahlrändern 12 und 13 begrenzt. Die Strahlung trifft auf einen Kollimator 14, durch dessen Bohrungen lediglich die Teilstrahlen 15 bis 19 durchgelassen werden. Diese treffen in den Teilflächen 21 bis 25 auf das zu untersuchende Blech 20 auf. Diese Teilflächen haben bei einem Ausführungsbeispiel einen Durchmesser von 2 mm und sie liegen bei dem Ausführungsbeispiel alle innerhalb eines Bereiches, um den ein ca. 10 cm großer Kreis als Begrenzung gezogen werden kann. Die Maße 2 mm und 10 cm sind jedoch nicht entscheidend, da diese Zahlen auch größer oder kleiner gewählt werden können. Die am Blech 20 gebeugten Strahlen treffen unterhalb des Bleches 20 auf die Detektoren 26 bis 30 auf. Die gebeugten Strahlen bilden in der Ebene der Detektoren nur einen schmalen Kreisring, der meßtechnisch von Bedeutung ist.

Das Blech 20 kann aus einer ruhenden Blechtafel bestehen. Es kann jedoch auch gemessen und ausgewertet werden, wenn das Blech 20 sich in Bewegung befindet und sich z. B. mit einer Geschwindigkeit von 10 bis 30 m/sec durch die Meßvorrichtung hindurch bewegt.

In der Fig. 1 ist der Übersichtlichkeit halber die Größe der Detektoren im Verhältnis zur Größe des Kreisringes erheblich kleiner gezeichnet, als dies der Wirklichkeit entspricht. Es eignen sich nur wenige Positionen auf dem Kreisring zum Anbringen von Detektoren. Beim Anbringen eines zweiten Detektors im gleichen Beugungskegel werden zusätzliche Meßwerte gewonnen.

Vor jedem Detektor ist ein Kollimator angebracht, der in der Fig. 1 nicht eingezeichnet worden ist.

Die Detektoren 26 bis 30 sind bei dem Ausführungsbeispiel innerhalb eines Gehäuses untergebracht, das durch einen geschlossenen Heliumkühlkreislauf auf angenähert -190°C gekühlt wird.

Der Detektor 26 verwandelt die auftretende Strahlung in einen Spannungsimpuls, der über den Vorverstärker 38 verstärkt wird. Die Spannungsimpulse werden im Vielkanalanalysator 31 nach der Impulshöhe analysiert und bestimmten Beugungsreflexen zugeordnet.

Es ist jedem der Detektoren 26 bis 30 einer der Vorverstärker 38 bis 42 und ein Vielkanalanalysator 31 bis 35 nachgeschaltet.

Von den Impulshöhen- bzw. Vielkanalanalysatoren 31 bis 35 werden die Informationen über die Intensität der verschiedenen Beugungsreflexe, sortiert nach den einzelnen Detektoren, an den Rechner 36 weitergeleitet. Dieser ist entsprechend den eingangs erwähnten Rechenverfahren von Bunge programmiert, so daß er daraus die Texturwerte errechnet, die an einem Ausgabegerät 37 angezeigt oder gedruckt werden.

Die Positionen der Detektoren 26 bis 30 auf den kreisringförmigen Beugungsstrahlen und die Positionen der kreisringförmigen Beugungsstrahlen zueinander sind nicht willkürlich frei wählbar. Es können nur Positionen ausgewählt werden, die sich mit einer ausgeprägten Intensitätsänderung bezüglich Texturänderungen auszeichnen. So müssen z. B. bei der Bestimmung des Anisotropiewertes r bei einer Anzahl von 4 Detektoren mindestens 5 Beugungsreflexe pro Detektor ausreichend genau vom Vielkanal- bzw. Impulshöhenanalysator erfaßt werden. Falls weniger als 5 Beugungsreflexe erfaßt werden, so läßt sich dieses durch eine Erhöhung der Anzahl der Detektoren ausgleichen, wodurch die Vorrichtung komplizierter und teurer wird. Es hat sich herausgestellt, daß bei Blechstärken bis zu 4 mm 5 Beugungsreflexe pro Detektor ausgewertet werden können.
Es wäre möglich, günstige Positionen durch Verschieben z. B. der Detektoren zu finden. Für einen Fachmann ist es jedoch zweckmäßig, wenn er die günstigen Positionen errechnet, da die Beugung und deren Intensität an den Kristallgittern nach bekannten Gesetzmäßigkeiten erfolgt.

Bei der Auswertung der Meßergebnisse muß berücksichtigt werden, daß auch ein isotropes, texturlos angenommenes Blech eine Beugung der Strahlung bewirkt. Der Meßwert ist der Quotient aus den Intensitäten der gebeugten Reflexe der texturierten Probe in Form eines Bandes oder Bleches und den entsprechenden Intensitäten der texturlosen Probe.

Die durch Kristallgitterebenen hervorgerufene Beugung läßt sich deshalb im Programm des Rechners 35 nur ermitteln, wenn vorher für die Position der Teilflächen 21 bis 25 die Intensität der Beugung des texturlos gedachten Bleches ermittelt wird. Zu diesem Zweck wird anstelle des zu untersuchenden Bleches eine texturlose Probe in die Meßvorrichtung an die Position einer jeden Teilfläche eingeführt. Der gemessene Wert wird vom Rechner nach bekannten Gesetzmäßigkeiten auch auf andere Blechdicken umgerechnet. Die texturlose Probe besteht aus einem flachen, dünnwandigen Gefäß aus Kunststoff, in das Eisenpulver gefüllt wird.

Das Meßergebnis der texturlosen Probe mit Füllung wird noch dahingehend korrigiert, daß diese auch ohne Füllung mit Eisenpulver gemessen wird, um die Streuintensitäten und die Absorbtion des reinen Kunststoff es zu berücksichtigen.

Die Messung an einer texturlosen Probe ist nur bei der ersten Inbetriebnahme des ersten gebauten Meßgerätes erforderlich. Falls später baugleiche Meßgeräte erzeugt werden, so können die Meßwerte des ersten Gerätes bezüglich der texturlosen Probe übernommen werden. Die texturlose Probe kann vorteilhaft auch bei späteren Messungen zum Abgleichen des Meßgerätes benutzt werden.

Das Verfahren und die Vorrichtung sind vorteilhaft anwendbar bei der Bestimmung der Texturen von Stahlblechen. Aus diesen Texturen können texturabhängige Werkstoffeigenschaften wie der r-Wert, magnetische Eigenschaften und der E-Modul bestimmt werden.

Es ist ebenfalls möglich, anstelle einer Strahlungsquelle mit mehreren durch Kollimatoren erzeugten Strahlen, eine Strahlungsquelle mit nur einem Kollimator und einem Strahl zu nehmen, wenn die Strahlungsquelle oder ihr Kollimator in durch Anschläge festgelegte Positionen schwenkbar sind. Die Analyse der gebeugten Strahlen kann in diesen Fällen nur zeitlich nacheinander entsprechend den Schwenkbewegungen erfolgen.

Bei der Verwendung von Gammastrahlen anstelle von Röntgenstrahlen müssen z. B. bei der Messung des Anisotropiewertes 5 mal soviel Teilflächen unter gegebenenfalls unterschiedlichen Beugungswinkeln bestrahlt werden, da es sich um eine monochromatische Strahlungsquelle handelt und pro Detektor lediglich ein Beugungsreflex erhalten wird. Die Verwendung mehrerer Gammastrahlenquellen mit unterschiedlichen Strahlungsenergien kann die Anzahl der zu bestrahlenden Teilflächen wieder reduzieren.

Mit den zuletzt beschriebenen Abwandlungen der Strahlungsquellen ist die Erfindung zwar durchführbar, die Vorrichtungen werden jedoch komplizierter und etwas störanfälliger.

Die günstigste Ausführungsform der Erfindung enthält, wie ausführlich beschrieben wurde, eine Röntgenröhre, deren Strahl durch Kollimatoren in Teilstrahlen aufgeteilt wird.

## Patentansprüche

1. Verfahren zur Texturanalyse von gewalzten Blechen (20) und Bändern mit Hilfe von diese durchstrahlenden Röntgen- oder Gammastrahlen, wobei deren am kristallinen Gitteraufbau hervorgerufene Beugung analysiert wird und daraus die Texturwerte berechnet werden und wobei diese Werte bei der Berechnung der Texturkoeffizienten auf eine texturlose Probe bezogen werden, dadurch gekennzeichnet, daß die Röntgen- oder Gammastrahlen gleichzeitig oder zeitlich hintereinander unter verschiedenen Winkeln auf mehrere Teilflächen (21, 22) des zu untersuchenden Bleches (20) oder Bandes gerichtet werden und gleichzeitig oder zeitlich hintereinander an jeder Teilfläche (21, 22) analysiert werden und die aus den Teilflächen (21, 22) gewonnenen Meßwerte bei der Weiterverarbeitung und Zuordnung zu Texturen so behandelt werden, als ob sie in bekannter Weise aus nur einer Teilfläche gewonnen wurden, die unter den selben verschiedenen Winkeln angestrahlt wurde, unter denen die Teilflächen angestrahlt wurden.

2. Verfahren nach Anspruch 1, dadurch gekennzeichnet, daß die Strahlung für jede Teilfläche (21, 22) durch Kollimieren der Strahlung einer Strahlungsquelle (11) gewonnen wird.

3. Verfahren nach Anspruch 2, dadurch gekennzeichnet, daß bei Bestrahlung durch Röntgenstrahlen 3 bis 8 Teilflächen und bei Bestrahlung durch Gammastrahlen 15 bis 40 Teilflächen bestrahlt werden.

4. Verfahren nach den Ansprüchen 1 bis 3, dadurch gekennzeichnet, daß bei sich in Längsrichtung bewegenden Blechen (20) und Bändern gemessen und analysiert wird.

5. Vorrichtung zur Messung und Bestimmung von Texturkoeffizienten an gewalzten, metallischen Bändern und Blechen mit Hilfe von diese durchstrahlenden Röntgen- oder Gammastrahlen und deren am kristallinen Gitteraufbau hervorgerufenen Beugung nach dem Verfahren der Ansprüche 1 bis 4 mit einer Strahlungsquelle (11) und einem im Abstand von dieser innerhalb des Strahlenbündels befestigten Detektorsystem (26 - 30) mit Ein- oder Vielkanalanalysatoren (31 - 35) und einer angeschlossenen Auswerteinrichtung (36) in Form eines Computers und einem zwischen der Strahlungsquelle und dem Detektor befindlichen Durchlaß für das zu untersuchende Band oder Blech, dadurch gekennzeichnet, daß unmittelbar vor dem Austrittfenster der Strahlungsquelle (11) ein Kollimatorsystem (14) zur Bildung von, unter verschiedenen Winkeln auf mehrere Teilflächen des zu untersuchenden Bandes oder Bleches richtbaren Teilstrahlung (15 - 19), angebracht ist, und für die Teilstrahlung (15 - 19) eines jeden Kollimatordurchlasses mindestens ein Detektor (26 - 30) mit nachgeschaltetem Ein- oder Vielkanalanalysator (31 - 35) angebracht ist.

6. Vorrichtung nach Anspruch 5, dadurch gekennzeichnet, daß die Strahlungsquelle eine Röntgenröhre (11) ist.

7. Vorrichtung nach Anspruch 5, dadurch gekennzeichnet, daß die Strahlungsquellen Gammastrahler sind.

8. Vorrichtung nach den Ansprüchen 5 bis 7, dadurch gekennzeichnet, daß im Bereich jedes kreisringförmigen Beugungsstrahles mehr als ein Detektor mit angeschlossenem Ein- oder Vielkanalanalysator installiert ist.

9. Vorrichtung nach den Ansprüchen 5 bis 8, dadurch gekennzeichnet, daß jeder Detektor (26, 27) aus einem Einzelkristall besteht und mehrere Detektoren baulich zu einem gekühltem Detektorsystem zusammengefaßt sind.

10. Vorrichtung nach den Ansprüchen 5 bis 9, dadurch gekennzeichnet, daß die Positionen der Detektoren (26, 27) so gelegt sind, daß ein großer Teil der Pole der vorkommenden idealen Lagen entsprechend den jeweiligen Bändern und Blechen abgedeckt wird, so daß diese eine ausgeprägte Intensitätsänderung bezüglich Texturänderungen besitzen.

11. Vorrichtung nach den Ansprüchen 5, 6, 8, 9 und 10, dadurch gekennzeichnet, daß diese eine 80 bis 160 kV Röntgenröhre (11) bei Messungen an Stahlblechen (20) von über 2 mm Dicke enthält.

12. Vorrichtung nach den Ansprüchen 5 bis 11, dadurch gekennzeichnet, daß für die Positionen der Detektoren (26, 27) die Meßwerte mit einer texturlosen Probe ermittelt sind und in das Programm des Rechners (36) als Bezug einprogrammiert sind.

13. Vorrichtung nach den Ansprüchen 5 bis 12, dadurch gekennzeichnet, daß zur Bestimmung des Anisotropiewertes r bei über 2 mm dickem Stahlblech diese 4 bis 8 Meßflächen (21, 22) bzw. Detektoren (26, 27) enthält und je Detektor 3 bis 7 auswertbare Beugungsreflexe vorhanden sind.

## Claims

1. Process for texture analysis of rolled sheets (20) and strips with the aid of x-ray or gamma radiation penetrating them, wherein the diffraction produced at the crystalline lattice structure is analysed and used to calculate the texture values and wherein these values are related to a textureless specimen when calculating the texture coefficients, characterised in that the x-ray or gamma radiation are directed simultaneously or sequentially onto several partial plane areas (21, 22) of the sheet (20) or strip being analysed at different angles and are analysed simultaneously or sequentially at each partial plane area (21, 22) and the measured values obtained from the partial plane area (21, 22) are treated in such a manner when they are being processed further and assigned to textures, as if they had been computed in a known manner from only one partial plane area, which had been bombarded from the different angles used to bombard the partial plane area.

2. Process as in claim 1, characterised in that the radiation of each partial plane area (21, 22) is acquired by collimating the radiation from a radiation source (11).

3. Process as in claim 2, characterised in that 3 to 8 partial plane areas are irradiated when bombarding with x-rays and 15 to 40 partial plane areas are irradiated when bombarding with gamma rays.

4. Process as in claim 1 to 3 inclusive, characterised in that the measurements and analyses are carried out on sheets (20) and strips moving in the longitudinal direction.

5. Device for measuring and determining texture coefficients on rolled, metallic strips and sheets with the aid of x-ray or gamma radiation penetrating them and their diffraction produced at the crystalline lattice structure, according to the process as in claims 1 to 4 inclusive with a radiation source (11) and a detector system (26 - 30) with single or multi-channel analysers (31 - 35) attached at a distance from the source within the radiation beam and a connected evaluation unit (36) in the form of a computer and an opening located between the radiation source and the detector for the strip or sheet being analysed, characterised in that a collimator system (14), for the purpose of forming partial rays (15 - 19) which can be directed at different angles on to a plurality of partial surfaces of the strip or sheet being analysed, is fitted immediately in front of the outlet window of the radiation source (11) and at least one detector (26, 30) with single and multi-channel analyser (31, 35) fitted downstream is installed for the partial radiation (15 - 19) of each collimator opening.

6. Device as in claim 5, characterised in that the radiation source is an x-ray tube (11).

7. Device as in claim 5, characterised in that the radiation sources are gamma radiators.

8. Device as in claims 5 to 7 inclusive, characterised in that more than one detector with connected single or multi-channel analyser is installed within the range of each circular shaped diffraction ray.

9. Device as in claims 5 to 8 inclusive, characterised in that each detector (26, 27) consists of a single crystal and that several detectors are combined into a cooled detector system.

10. Device as in claims 5 to 9 inclusive, characterised in that the positions of the detectors (26, 27) are arranged in such a way that a greater part of the upper surface of the existing ideal layers are covered according to the strips and sheets concerned, so that they will have a pronounced change in intensity relating to the changes in texture.

11. Device as in claims 5, 6, 8, 9 and 10 inclusive, characterised in that it is equipped with an 80 to 160 kV x-ray tube (11) for measuring steel sheets (2) in excess of 2 mm thick.

12. Device as in claims 5 to 11 inclusive, characterised in that the measured values are determined with a textureless specimen for the positions of the detectors (26, 27) and are incorporated in the program of the computer (36) as reference.

13. Device as in claims 5 to 12 inclusive, characterised in that it is equipped with 4 to 8 measuring plane areas (21, 22) or detectors (26, 27) for determining the anisotropic values r of a steel sheet thicker than 2 mm and that there are 3 to 7 diffraction reflections which can be evaluated for each detector.

## Revendications

1. Procédé pour l'analyse de texture de tôles (20) et de feuillards laminés, à l'aide de rayons X ou de rayon gamma traversant ceux-ci, tandis que leur diffraction suscitée au niveau du réseau cristallin est analysée et les valeurs de texture calculées sur cette base, et que ces valeurs sont rapportées à un échantillon sans texture pour le calcul des coefficients de texture, caractérisé en ce que les rayons X ou gamma sont dirigés simultanément ou successivement sous différents angles sur plusieurs surfaces partielles (21, 22) de la tôle (20) ou du feuillard à analyser, et sont analysés simultanément ou successivement sur chaque surface partielle (21, 22), et les valeurs de mesure obtenues à partir des surfaces partielles (21, 22) sont traitées, lors du traitement ultérieur et de leur mise en relation avec des textures, comme si elles avaient été obtenues de manière connue à partir d'une seule surface partielle irradiée selon les mêmes angles variés sous lesquels les surfaces partielles ont été irradiées.

2. Procédé selon la revendication 1, caractérisé en ce que le rayonnement pour chaque surface partielle (21, 22) est obtenu par collimation du rayonnement d'une source de rayonnement (11).

3. Procédé selon la revendication 2, caractérisé en ce que, en cas d'irradiation par des rayons X, on irradie 3 à 8 surfaces partielles et, en cas d'irradiation par rayons gamma, on irradie 15 à 40 surfaces partielles.

4. Procédé selon les revendications 1 à 3, caractérisé en ce que les mesures et les analyses sont réalisées sur des tôles (20) et des feuillards se déplaçant dans le sens longitudinal.

5. Dispositif de mesure et de détermination de coefficients de texture de feuillards et de tôles métalliques laminés, à l'aide de rayons X ou gamma qui les traversent et de leur diffraction suscitée au niveau du réseau cristallin, selon le procédé des revendications 1 à 4, au moyen d'une source de rayonnement (11) et d'un système de détection (26 - 30) fixé à distance de celle-ci dans le faisceau de rayonnement, avec des analyseurs (31 - 35) à canal unique ou à canaux multiples et un dispositif d'exploitation (36) sous forme d'un ordinateur, et un passage pour le feuillard ou la tôle à analyser, entre la source de rayonnement et le détecteur, caractérisé en ce qu'un système de collimation (14) est monté, directement devant la fenêtre de sortie de la source de rayonnement (11), pour former des rayons partiels (15 - 19) dirigés suivant divers angles sur plusieurs surfaces partielles du feuillard ou de la tôle à examiner, et au moins un détecteur (26 - 30) suivi d'un analyseur à canal unique ou à canaux multiples (31 - 35) est prévu pour le rayonnement partiel (15 - 19) traversant chaque collimateur.

6. Dispositif selon la revendication 5, caractérisé en ce que la source de rayonnement est un tube à rayons X (11).

7. Dispositif selon la revendication 5, caractérisé en ce que la source de rayonnement est constituée par un dispositif à rayonnement gamma.

8. Dispositif selon les revendications 5 à 7, caractérisé en ce que plus d'un détecteur raccordé à un analyseur à canal unique ou canaux multiples est installé dans la zone de chacun des rayons de diffraction de forme circulaire.

9. Dispositif selon les revendications 5 à 8, caractérisé en ce que chaque détecteur (26, 27) est constitué d'un cristal unique et plusieurs détecteurs sont rassemblés pour former un système de détection refroidi.

10. Dispositif selon les revendications 5 à 9, caractérisé en ce que les positions des détecteurs (26, 27) sont choisies de manière telle qu'une grande partie des pôles des couches idéales présentes est couverte conformément aux feuillards et aux tôles considérés, de façon à produire une modification d'intensité marquée pour des modifications de texture.

11. Dispositif selon les revendications 5, 6, 8, 9 et 10, caractérisé en ce qu'il comprend un tube à rayons X (11) de 80 à 160 kV pour des mesures sur des tôles en acier (20) d'une épaisseur supérieure à 2 mm.

12. Dispositif selon les revendications 5 à 11, caractérisé en ce que, pour les positions des détecteurs (26, 27), on détermine les valeurs de mesure avec un échantillon sans texture, et on les introduits dans le programme du calculateur (36) en tant que référence.

13. Dispositif selon les revendications 5 à 12, caractérisé en ce que, pour la détermination de la valeur r d'anisotropie pour une tôle d'acier d'une épaisseur supérieure à 2 mm, il comprend 4 à 8 surfaces de mesure (21, 22) respectivement détecteurs (26, 27), et que 3 à 7 rayons diffractés exploitables sont disponibles pour chaque détecteur.
